Europäisches Patentamt

European Patent Office

Office européen des brevets

(19)

(11) Numéro de publication: **0 010 044**
**B1**

(12) **FASCICULE DE BREVET EUROPEEN**

(45) Date de publication du fascicule du brevet: 10.11.82

(21) Numéro de dépôt: 79400704.7

(22) Date de dépôt: 04.10.79

(51) Int. Cl.³: **C 01 G 56/00**, G 21 F 9/12, G 21 F 9/06, G 21 C 19/46, C 22 B 60/00

(54) Procédé de séparation de l'americium du curium.

(30) Priorité: 11.10.78 FR 7829016

(43) Date de publication de la demande: 16.04.80 Bulletin 80/8

(45) Mention de la délivrance du brevet: 10.11.82 Bulletin 82/45

(84) Etats contractants désignés: BE DE GB IT NL SE

(56) Documents cités:
US - A - 3 743 696

CHEMICAL ABSTRACTS, vol. 77, no. 16, 16 octobre 1972, page 453, no. 108062a Columbus, Ohio, U.S.A. K. WATANABE et al.: "Separation of plutonium and curium from irradiated americium by solvent extraction using HDEHP"
CHEMICAL ABSTRACTS, vol. 79, no. 18, 5 novembre 1973, page 244, no. 108645j Columbus, Ohio, U.S.A. V. M. VDOVENKO et al.: "Extractive separation of trace amounts of americium and curium during the oxidation of

(73) Titulaire: COMMISSARIAT A L'ENERGIE ATOMIQUE Etablissement de Caractère Scientifique Technique et Industriel B.P. 510 F-75752 Paris Cedex 15 (FR)

(72) Inventeur: Bathellier, André 1, Boulevard Colbert F-92330 Sceaux (FR) Inventeur: Germain, Michel 82, Chemin du Moulin F-91460 Marcoussis (FR) Inventeur: Musikas, Claude 12, rue du Moulin de la Planche F-91120 Villebon (FR)

(74) Mandataire: Mongrédien, André et al, c/o Brevatome 25, rue de Ponthieu F-75008 Paris (FR)

(56) Documents cités:
americium to the hexavalent state. I. Extractive separation using trioctylphosphine oxide and bis(2-ethylhexyl) phosphate".

Le dossier contient des informations techniques présentées postérieurement au dépôt de la demande et ne figurant pas dans le présent fascicule.

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

## Procédé de séparation de l'americium du curium

La présente invention a pour objet un procédé de séparation de l'américium du curium, contenus dans une solution aqueuse nitrique provenant, notamment, du retraitement de combustibles irradiés.

On sait que la séparation de l'américium du curium est une opération très difficile, du fait des propriétés chimiques très voisines que présentent ces deux éléments. De nombreux procédés ont été essayés à ce sujet.

Parmi les procédés de séparation de l'américium du curium connus jusqu'à ce jour, on peut citer la méthode de chromatographie en phase inversée selon laquelle on utilise une colonne contenant un support inerte, par exemple en téflon, sur lequel on a fait passer un solvant assez volatil qui va jouer le rôle d'extractant; la séparation de l'américium du curium contenus dans la solution que l'on fait passer dans la collone s'effectue par échange d'ions. Ce procédé de chromatographie en phase inversée permet d'obtenir une séparation convenable de l'américium du curium, mais s'avère difficilement utilisable pour des productions importantes en raison des difficultés rencontrées lors de la préparation et du fonctionnement hydraulique des colonnes.

Un autre procédé de séparation de l'américium du curium essayé jusqu'à présent est la séparation sur résine échangeuse d'ions (échangeurs minéraux ou échangeurs organiques). Selon cette technique, la séparation est effectuée par une élution sélective de l'américium et du curium à la valence III; la qualité de la séparation est fonction de la nature de l'éluant. Plusieurs éluants possibles ont donc été envisagés: par exemple, une solution hydro-alcoolique d'acide nitrique, une solution d'$\alpha$-hydroxy-isobutyrate d'ammonium, une solution hydro-alcoolique d'acide nitrique contenant du nitrate d'ammonium et du DTPA (acide diéthylène-triamino-pentacétique), une solution d'acide hydroxy-éthyl-diaminotriacétique. Selon ce procédé, le facteur de séparation de l'américium du curium reste faible; il est de l'ordre de 2 à 3. La même technique de séparation sur résine échangeuse d'ions, mais sous pression, permet d'effectuer des séparations de l'américium du curium plus efficaces et rapides; toutefois, sa mise en oeuvre demeure délicate du fait des fortes pressions utilisées (pressions voisines de 300 atmosphères).

Une autre technique de séparation de l'américium du curium, envisagée jusqu'à présent, est l'extraction par solvant des éléments à la valence III à l'aide d'amines en milieu relargant (qui consiste à additionner préalablement à la solution aqueuse à traiter des sels relargants tels que le nitrate d'aluminium ou le nitrate de lithium); après l'extraction des éléments à la valence III, une ré-extraction sélective peut être obtenue avec un complexant polyaminoacétique tel que le DTPA. Cette technique présente l'inconvénient que les facteurs de séparation de l'américium du curium obtenus ne sont que de l'order de 2 à 3.

Une autre technique de séparation de l'américium du curium est la précipitation sélective de l'un des constituants: on peut précipiter le curium à la valence III sous forme de fluorure ou d'oxalate en présence d'américium à la valence VI, ou bien on peut séparer l'américium par précipitation de carbonate double d'américium et de potassium. Toutefois, cette technique de précipitation de l'un des constituants ne permet d'obtenir que des facteurs de séparation assez limités, ce qui oblige à répéter plusieurs fois les mêmes opérations pour obtenir la pureté désirée en l'un des éléments.

On a également envisagé de séparer l'américium du curium par extraction liquide en oxydant l'américium à une valence supérieure et en l'extrayant ensuite dans un solvant organophosphoré constitué par de l'acide di(2-éthyl-hexyl) phosphorique. Cependant, les résultats obtenus ne sont pas satisfaisants car il est difficile de maintenir l'américium à l'état oxydé. Toutefois, on peut améliorer les résultats obtenus par ce procédé en utilisant comme solvant l'acide bis(2,6-diméthyl-4-heptyl)-phosphorique comme cela est décrit dans le brevet américain 3.743.696. Cependant, on note que selon ce brevet il est nécessaire de chauffer la solution pour oxyder complétement l'américium.

La présente invention a pour objet un procédé de séparation de l'américium du curium qui pallie les inconvénients des procédés rappelés ci-dessus et qui permet d'obtenir une séparation rapide et efficace de l'américium et du curium.

Le procédé conforme à l'invention se caractérise en ce que l'on soumet la solution aqueuse nitrique de départ à une oxydation, à température ambiante, en présence d'acide phosphorique ou d'ions phosphate à une concentration au plus égale à 0,1 mole par litre, pendant au moins deux heures de façon à faire passer l'américium à la valence VI, on met la solution ainsi traitée en contact avec un solvant organique peu réducteur et présentant une forte affinité pour l'américium à la valence VI de façon à extraire l'américium dans la phase organique, on soumet ensuite la phase organique contenant l'américium à la valence VI à un lavage, puis on réextrait l'américium de la phase organique à l'aide d'une solution aqueuse réductrice.

Ainsi, selon le procédé de l'invention, on tient compte du fait que les facteurs de séparation entre l'américium trivalent et le curium trivalent sont faibles et, de ce fait, on fait passer l'américium à une autre valence, à savoir la valence VI, de façon à avoir un facteur de séparation plus grand. En effet, on sait que l'américium existe en milieu acide sous les valences III, IV, V, VI, tandis que le curium ne présente que les valences III et IV.

Selon une caractéristique avantageuse de l'invention, on réalise les étapes d'extraction, de lavage et de réextraction dans des extracteurs centrifuges, le temps de séjour des solutions dans chacun des extracteurs étant faible, de l'ordre de quelques diazaines de secondes.

L'oxydation préalable de la solution de départ pour faire passer l'américium à la valence VI peut s'effectuer à l'aide de persulfate de sodium en présence de nitrate d'argent et d'acide phosphorique.

Le solvant organique grâce auquel on extrait l'américium de la solution aqueuse de départ est constitué par au moins un composé choisi dans le groupe comprenant les composés organophosphorés, les amines ou leurs mélanges dilués dans un solvant inerte approprié.

Le lavage de la phase organique contenant l'américium à la valence VI s'effectue à l'aide d'une solution aqueuse oxydante contenant du persulfate de sodium et du nitrate d'argent.

La ré-extraction de l'américium de la phase organique s'effectue à l'aide d'une solution aqueuse réductrice telle qu'une solution de nitrites ou de l'eau oxygénée.

Selon une caractéristique avantageuse du procédé de l'invention, l'étape préalable selon laquelle on oxyde la solution de départ de façon à faire passer l'américium à la valence VI s'effectue en présence d'un composé complexant tel que l'acide phosphorique ou les ions phosphate. En effet, dans les solutions aqueuses de départ, l'américium est à la valence III.

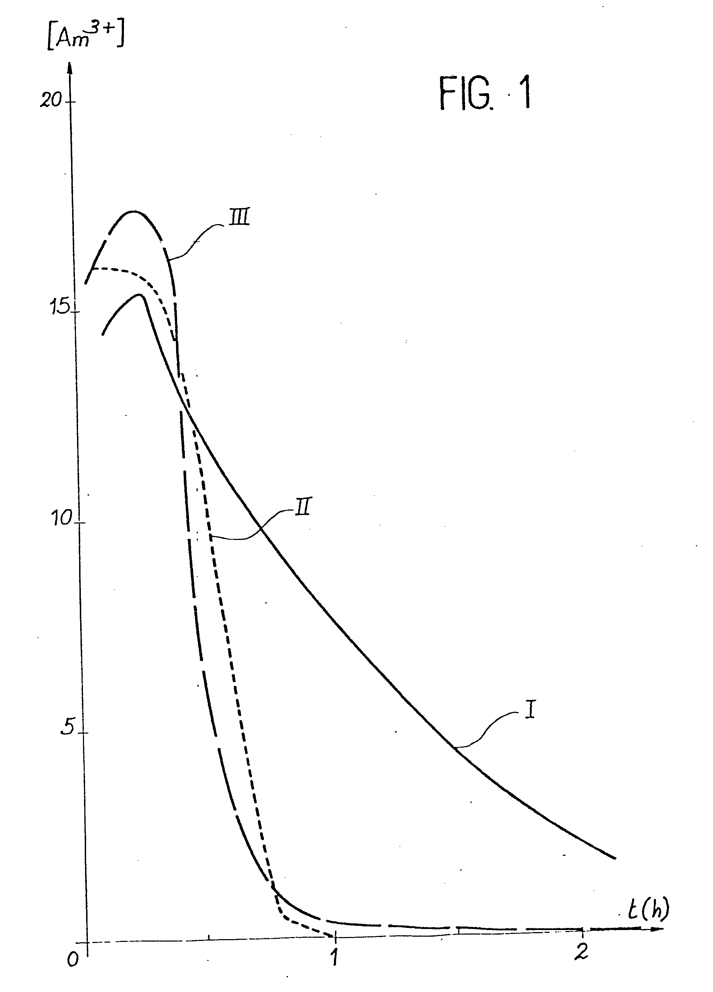

La figure 1 jointe montre l'influence de la présence de l'acide phosphorique sur la vitesse d'oxydation de l'américium. Sur cette figure 1, on a représenté les courbes donnant la concentration en $Am^{3+}$ en fonction du temps, ce qui donne une idée de la vitesse d'oxydation de l'américium suivant que l'on procède à cette oxydation en l'absence de $H_3PO_4$, en présence de $H_3PO_4$ $10^{-2}M$ et en présence de $H_3PO_4$ $10^{-1}M$. Pour cela, on a opéré à 21°C avec une solution ayant la composition suivante:

| | |
|---|---|
| $Am^{3+}$ | $9,27 . 10^{-4}M$ |
| $HNO_3$ | $10^{-1}M$ |
| $Na_2SO_2O_8$ | $10^{-1}M$ |
| $AgNO_3$ | $10^{-2}M$ |

La courbe I représente l'oxydation de cette solution en l'absence d'acide phosphorique, la courbe II, l'oxydation de cette solution en présence d'$H_3PO_4 . 10^{-1}M$, et la courbe III, l'oxydation de cette solution en présence d'$H_3PO_4 . 10^{-2}M$. On voit, d'après ces courbes, l'effet accélérateur des ions phosphate: en effet, en présence d'$H_3PO_4 . 10^{-1}M$, l'oxydation de $Am^{3+}$ en $AmO_2^{++}$, est quantitative en une heure.

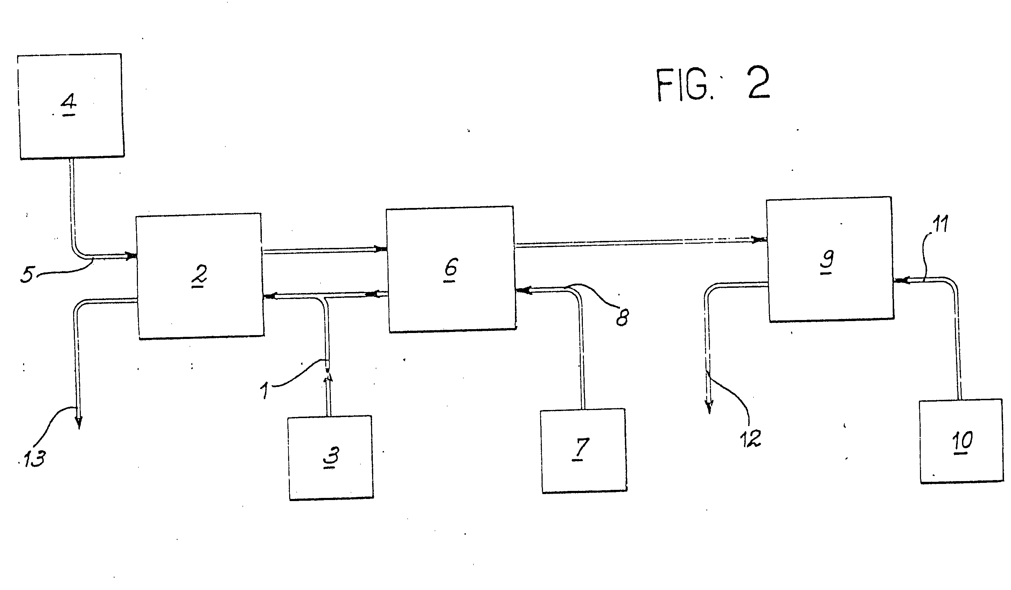

L'invention sera mieux comprise à la lecture de la description qui suit de la mise en oeuvre du procédé de l'invention, description faite en se référant à la figure 2 jointe qui représente de façon schématique l'installation de réalisation dudit procédé.

On introduit en 1, dans un extracteur-centrifuge 2, une solution aqueuse nitrique de départ 3 contenant l'américium et le curium, que l'on a préalablement soumise à une oxydation à l'aide d'un mélange de nitrate d'argent et de persulfate de sodium en présence d'acide phosphorique. Dans l'extracteur 2, cette solution 3 est mise à contrecourant d'un solvant organique 4, introduit en 5 dans l'extracteur 2. Dans l'extracteur 2, le solvant organique se charge en américium et passe dans l'extracteur-centrifuge 6, où il est mis à contre-courant avec une solution de lavage 7, introduite en 8 dans l'extracteur 6; cette solution de lavage 7 est une solution oxydante d'acide nitrique contenant du nitrate d'argent et du persulfate de sodium ainsi que de l'acide phosphorique. Dans cet extracteur 6, le curium qui avait été légèrement extrait dans l'extracteur 2 repasse dans la phase aqueuse. Le solvant organique, ainsi chargé d'américium, passe ensuite dans l'extracteur-centrifuge 9 dans lequel il est mis à contre-courant avec une solution de ré-extraction 10, introduite en 11 dans l'extracteur 9; cette solution de ré-extraction 10 est une solution aqueuse réductrice telle qu'une solution de nitrites ou de l'eau oxygénée ou tout autre réducteur. Dans l'extracteur 9, l'américium contenu dans la phase organique passe dans la phase aqueuse et on le récupère en 12. A la sortie de l'extracteur 2, on obtient en 13 une solution contenant du curium purifié, mais qui contient néanmoins quelques traces d'américium à la valence III; on peut soumettre ce curium à un deuxième cycle si on désire l'avoir plus pur: ce deuxième cycle consiste à soumettre la solution, obtenue en 13, aux mêmes étapes d'oxydation préalable, de mise à contre-courant avec un solvant organique peu réducteur et présentant une forte affinité pour l'américium à la valence VI, puis aux opérations de lavage et de ré-extraction.

On donne ci-dessous, à titre non limitatif, quelques exemples de réalisation du procédé considéré.

Exemple 1

On part d'une solution aqueuse qui a la composition suivante:

| | |
|---|---|
| $Am^{3+}$ | $4,15 . 10^{-3}M$ |
| $Cm^{3+}$ | $1,43 . 10^{-4}M$ |
| $HNO_3$ | $10^{-1}M$ |

On additionne à cette solution le mélange $Na_2S_2O_8$ 0,1 M, $AgNO_3 10^{-2}M$, $H_3PO_4 10^{-2}M$, et on laisse l'oxydation se faire pendant 15 heures à la température ambiante.

On introduit ensuite cette solution aqueuse préalablement oxydée, à un débit de 105 ml/heure, dans un extracteur-centrifuge où elle circule à contre-courant avec un solvant organique qui est constitué par de l'oxyde de trioctylphosphine dilué à $3.10^{-2}$M dans un diluant paraffinique inerte et qui est introduit dans l'extracteur à un débit de 500 ml/heure. Le temps de séjour dans l'extracteur est de 50 secondes. L'oxyde de trioctylphosphine chargé en américium VI passe alors dans un autre extracteur-centrifuge où il est mis à contre-courant avec une solution de lavage introduite à un débit de 340 ml/heure et de composition:

| | |
|---|---|
| HNO₃ | $10^{-1}$M |
| H₃PO₄ | $10^{-2}$M |
| AgNO₃ | $10^{-2}$M |
| Na₂S₂O₈ | $10^{-1}$M |

A l'équilibre, on obtient: l'américium en phase organique avec un rendement de 95,9% et un facteur de décontamination en curium de 14,5; et le curium en phase aqueuse avec un rendement de 94,2% et un facteur de décontamination en américium de 24.

On rappelle que le facteur de décontamination de l'américium en curium se définit en divisant le rapport américium/curium dans le solvant organique par le rapport américium/curium dans la solution de départ.

De même, le facteur de décontamination du curium en américium est calculé en divisant le rapport curium/américium dans la solution aqueuse qui a été soumise à l'extraction par le rapport curium/américium dans la solution de départ.

Exemple 2

On part de la même solution aqueuse que dans l'exemple 1, et on l'oxyde à l'aide du mélange Na₂S₂O₈ 0,1 M, AgNO₃ $10^{-2}$M, H₃PO₄ $10^{-2}$M, pendant cinq heures.

On effectue ensuite, dans un extracteur-centrifuge, la mise à contre-courant de cette solution ainsi oxydée avec un solvant organique constitué par de l'acide di-2-éthyl-hexyl phosphorique 0,15 M dilué dans un diluant paraffinique inerte. Les conditions opératoires telles que débit, etc. ainsi que l'opération de lavage, sont les mêmes que dans l'exemple 1.

A l'équilibre, on obtient: l'américium en phase organique avec un rendement de 92,4% et un facteur de décontamination en curium de 5,3 et le curium en phase aqueuse avec un rendement de 99,8% et un facteur de décontamination en américium de 13.

Exemple 3

On part de la même solution aqueuse que dans les exemples 1 et 2 et on l'oxyde à l'aide du mélange Na₂S₂O₈ 0,1 M, AgNO₃ $10^{-2}$M, H₃PO₄ $10^{-2}$M, pendant trois heures à la température ordinaire.

On effectue ensuite, dans un extracteur-centrifuge, la mise à contre-courant de cette solution ainsi oxydée avec un solvant organique constitué par de l'acide di-2-éthylhexyl phosphorique 0,15 M dilué dans un diluant paraffinique inerte. Les conditions opératoires telles que débit, etc., ainsi que l'opération de lavage, sont les mêmes que dans l'exemple 1.

A l'équilibre, on obtient: l'américium en phase organique avec un rendement de 87,7% et un facteur de décontamination en curium de 222, et le curium en phase aqueuse avec un rendement de 99,6% et un facteur de décontamination en américium de 8.

Exemple 4

On introduit ensuite cette solution position suivante:

| | |
|---|---|
| Am³⁺ | $10^{-3}$M |
| Cm³⁺ | $8.10^{-6}$M |
| HNO₃ | 0,2 M |

On ajoute à cette solution Na₂S₂O₈, AgNO₃, et H₃PO₄, en quantités telles que la solution ait des concentrations en Na₂S₂O₈ de 0,1 M, en AgNO₃ de $10^{-2}$M et en H₃PO₄ de $3.10^{-2}$M. On laisse l'oxydation se faire pendant 2 h à la température ambiante ($21\pm2$°C).

On introduite ensuite cette solution préalablement oxydée, à un débit de 150 ml/h dans un extracteur centrifuge, où elle circule à contre-courant avec un solvant organique qui est constitué par un mélange synergique d'oxyde de tri-n-octylphosphine (0,015 M) et d'acide di-2-éthylhexyl phosphorique (0,015 M) dans un diluant paraffinique. Le solvant organique est introduit dans l'extracteur à un débit de 600 ml/h.

On précise que l'extraction est réalisée dans trois étages successifs constitués chacun par un extracteur centrifuge et que le temps de séjour des solutions dans chaque extracteur est de 40 secondes.

A la sortie du dernier étage d'extraction, le solvant organique chargé en Am VI passe alors dans trois étages de lavage où il est mis en contact à contre-courant avec une solution de lavage introduite à un débit de 150 ml/h et ayant la composition suivante:

| | |
|---|---|
| HNO₃ | 0,2 M |
| H₃PO₄ | $3.10^{-2}$M |
| Na₂S₂O₈ | $10^{-1}$M |
| AgNO₃ | $10^{-2}$M |

On précise que les trois étages de lavage sont constitués chacun par un extracteur centrifuge.

A l'équilibre, on obtient l'américium en phase organique avec un rendement de 87% et un facteur de décontamination de l'américium en curium de 7200, on obtient le curium en phase aqueuse avec un rendement de 99,999% et un facteur de décontamination du curium en américium de 7,5.

Exemple 5

On part de la même solution oxydée que, dans l'exemple 5 et on utilise également trois étages d'extraction constitués par des extracteurs centrifuges et trois étages de lavage constitués également par des extracteurs centrifuges. Pour l'extraction, on utilise comme solvant organique de l'acide di(2,6-diméthyl-4-heptyl)phosphorique 0,2 M dans un diluant paraffinique et pour le lavage, on utilise la même solution de lavage que celle de l'exemple 4.

Dans les étages d'extraction, la solution aqueuse est introduite à un débit de 420 ml/h et le solvant à un débit de 1690 ml/h. Le temps de séjour des solutions dans chaque extracteur est de 35 secondes. Dans les étages de lavage on introduit la solution de lavage à un débit de 105 ml/h.

A l'équilibre, on obtient l'américium en phase organique avec un rendement de 86% et un facteur de décontamination en curium de 18750 et le curium en phase aqueuse avec un rendement de 99,999% et un facteur de décontamination en américium de 7,1.

Ainsi, le procédé conforme à l'invention permet d'obtenir de façon quasi-quantitative l'américium débarrassé du curium, la pureté désirée pouvant être aisément obtenue par le choix des conditions de lavage. La mise en oeuvre du procédé est très simple et se prête parfaitement à la production de quantités importantes d'américium de façon continue. Le fait d'utiliser des extracteurs-centrifuges, qui permettent des temps de mise en contact des différentes phases au cours des différentes opérations faibles, permet d'éviter la décomposition des solvants par radiolyse, ce qui est particulièrement important lorsqu'on traite des solutions riches en curium.

**Revendications**

1. Procédé de séparation de l'américium et du curium contenus dans une solution aqueuse nitrique, caractérisé en ce que l'on soumet la solution nitrique à une oxydation à température ambiante, en présence d'acide phosphorique ou d'ions phosphates, à une concentration au plus égale à 0,1 M par litre, pendant au moins deux heures, de façon à faire passer l'américium à la valence VI, on met la solution ainsi traitée en contact avec un solvant organique, comprenant au moins un composé organophosphoré peu réducteur, présentant une forte affinité pour l'américium à la valence VI de façon à extraire l'américium dans la phase organique, on soumet ensuite la phase organique contenant l'américium à la valence VI à un lavage, puis on réextrait l'américium de la phase organique à l'aide d'une solution aqueuse réductrice.

2. Procédé selon la revendication 1, caractérisé en ce que l'on réalise les étapes d'extraction, de lavage et de réextraction dans des extracteurs centrifuges, les temps de séjour des solutions dans chacun des extracteurs étant de 35 à 50 secondes.

3. Procédé selon l'une quelconque des revendications 1 et 2, caractérisé en ce que l'on soumet l'américium de la solution de départ à une oxydation à l'aide de persulfate de sodium en présence de nitrate d'argent et d'acide phosphorique.

4. Procédé selon l'une quelconque des revendications 1 à 3, caractérisé en ce que le solvant organique comprend au moins un composé organophosphoré choisi dans le groupe comprenant l'oxyde de trioctylphosphine, l'acide di-2-éthylhexyl phosphorique et l'acide di(2,6-diméthyl-4-heptyl) phosphorique.

5. Procédé selon l'une quelconque des revendications 1 à 4, caractérisé en ce que l'on soumet la phase organique contenant l'américium à la valence VI à un lavage à l'aide d'une solution d'acide nitrique oxydante contenant du persulfate de sodium, du nitrate d'argent et de l'acide phosphorique.

6. Procédé selon l'une quelconque des revendications 1 à 5, caractérisé en ce que la solution aqueuse réductrice utilisée pour la réextraction de l'américium comprend des nitrites ou de l'eau oxygénée.

**Patentansprüche**

1. Verfahren zum Trennen von in wässriger, salpetersaurer Lösung enthaltenem Americium und Curium, dadurch gekennzeichnet, daß die salpetersaure Lösung bei Umgebungstemperatur in Gegenwart von Phosphorsäure oder Phosphationen mit einer Konzentration von höchstens gleich 0,1 M pro Liter während wenigstens zweier Stunden einer Oxidation ausgesetzt wird, um das Americium zu der Wertigkeit VI übergehen zu lassen, daß die so behandelte Lösung mit einem organischen Lösungsmittel in Berührung gebracht wird, welches wenigstens eine wenig reduzierende Organophosphatverbindung enthält, die eine starke Affinität für das Americium mit der Wertigkeit VI aufweise, um das Americium in der organischen Phase zu extrahieren, daß man anschließend die das Americium mit der Wertigkeit VI enthaltende organische Phase wäscht und das Americium aus der organischen Phase mit Hilfe einer wässrigen, reduzierende Lösung extrahiert.

2. Verfahren nach Anspruch 1, dadurch gekennzeichnet, daß die Extrahierungsschritte des Waschens und des Extrahierens mit Zentrifugalextraktoren durchgeführt werden, wobei die Verweilzeit der Lösungen in jedem der Extraktoren 35 bis 50 Sekunden beträgt.

3. Verfahren nach Anspruch 1 oder 2, dadurch gekennzeichnet, daß das Americium der Ausgangslösung einer Oxidation mit Hilfe von Natriumpersulfat in Gegenwart von Silbernitrat und Phosphorsäure ausgesetzt wird.

4. Verfahren nach einem der Ansprüche 1 bis 3, dadurch gekennzeichnet, daß das organische Lösungsmittel wenigstens eine Organophosphatverbindung enthält, die aus der Trioctylphosphinoxid, Di-2-Äthylhexyl-Phosphorsäure und Di(2,6-Dimethyl-4-Heptyl) Phosphorsäure umfassenden Gruppe ausgewählt ist.

5. Verfahren nach einem der Ansprüche 1 bis 4, dadurch gekennzeichnet, daß die das Americium mit der Wertigkeit VI enthaltende organische Phase mit Hilfe einer Lösung von oxidierender Salpetersäure gewaschen wird, welche Natriumpersulfat, Silbernitrat und Phosphorsäure enthält.

6. Verfahren nach einem der Ansprüche 1 bis 5, dadurch gekennzeichnet, daß die reduzierende, wässrige Lösung, welche für die Extraktion des Americiums verwandt wird, Nitrite oder Wasserstoff-superoxid enthält.

## Claims

1. Process for the separation of americium and curium contained in an aqueous nitric solution characterized in that the nitric solution is oxidized at ambient temperature in the presence of phosphoric acid or phosphate ions having a concentration of at least 0.1 M per litre during at least two hours, whereby to convert americium into the hexavalent state, the thus-treated solution is contacted with an organic solvent, comprising at least one sparingly-reducing organophosphorus compound, having a strong affinity for hexavalent americium to extract the americium into the organic phase, the organic phase containing hexavalent americium is washed, and the americium is reextracted from the organic phase by an aqueous reducing solution.

2. Process according to Claim 1 characterized in that the extraction, washing and re-extraction steps are carried out in centrifugal extractors, the residence time of the solutions in each of the extractors being from 35 to 50 seconds.

3. Process according to Claim 1 or 2 characterized in that the americium in the starting solution is oxidized by sodium persulphate in the presence of silver nitrate and phosphoric acid.

4. Process according to any one of Claims 1 to 3 characterized in that the organic solvent comprises at least one organophosphorus compound selected from the group consisting of trioctyl phosphine oxide, di-2-ethylhexyl phosphoric acid and di-(2,6-dimethyl-4-heptyl) phosphoric acid.

5. Process according to any one of Claims 1 to 4 characterized in that the organic phase containing hexavalent americium is washed with an oxidizing solution of nitric acid containing sodium persulphate, silver nitrate and phosphoric acid.

6. Process according to any one of Claims 1 to 5 characterized in that the aqueous reducing solution employed for the re-extraction of americium comprises nitrites or oxygenated water.

FIG. 1

FIG. 2

0010044